(19) Europäisches Patentamt
European Patent Office
Office européen des brevets

(11) **EP 2 187 169 B1**

(12) **FASCICULE DE BREVET EUROPEEN**

(45) Date de publication et mention
de la délivrance du brevet:
**28.12.2011 Bulletin 2011/52**

(51) Int Cl.:
***G01C 19/66*** *(2006.01)*

(21) Numéro de dépôt: **09175346.7**

(22) Date de dépôt: **09.11.2009**

(54) **Gyrolaser a état solide à pompage optique controlé**

Festkörperlaserkreisel mit optisch kontrollierter Pumpfunktion.

Solid-state gyrolaser with controlled optical pumping

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **18.11.2008 FR 0806445**

(43) Date de publication de la demande:
**19.05.2010 Bulletin 2010/20**

(73) Titulaire: **Thales**
**92200 Neuilly Sur Seine (FR)**

(72) Inventeurs:
• **Schwartz, Sylvain**
**78470, SAINT-REMY LES CHEVREUSE (FR)**
• **Feugnet, Gilles**
**91120, PALAISEAU (FR)**
• **Gutty, François**
**86100, CHATELLERAULT (FR)**
• **Bonnaudet, Etienne**
**86130, ST GEORGES LES BAILLARGEAUX (FR)**
• **Alouini, Mehdi**
**78660, SAINT-MARTIN-DE-BRETHENCOURT
(FR)**
• **Pocholle, Jean-Paul**
**91290, LA NORVILLE (FR)**

(74) Mandataire: **Bréda, Jean-Marc et al
Marks & Clerk France
Conseils en Propriété Industrielle
Immeuble " Visium "
22, avenue Aristide Briand
94117 Arcueil Cedex (FR)**

(56) Documents cités:
**EP-A- 1 890 107**

• **DOTSENKO A V ET AL: "USE OF A FEEDBACK
LOOP FOR THE STABILIZATION OF A BEAT
REGIME IN A SOLID-STATE RING LASER"
SOVIET JOURNAL OF QUANTUM
ELECTRONICS, AMERICAN INSTITUTE OF
PHYSICS, NEW YORK, NY, US, vol. 16, no. 1, 1
janvier 1986 (1986-01-01), pages 58-63,
XP001173001 ISSN: 0049-1748**
• **THOMAS J. KANE: "Intensity Noise in Diode-
Pumped Single-Frequency Nd:YAG Lasers and
its Control by Electronic Feedback" IEEE
PHOTONICS TECHNOLOGY LETTERS, vol. 2, no.
4, 30 avril 1990 (1990-04-30), pages 244-245,
XP002535084**

**EP 2 187 169 B1**

## Description

Le domaine de l'invention est celui des gyrolasers à état solide, utilisés pour la réalisation de centrales inertielles nécessaires à la navigation de certains types de véhicules comme les aéronefs. Les gyrolasers sont des capteurs optiques de rotation fondés sur l'effet Sagnac. On ne détaille pas ici l'effet Sagnac, bien connu des spécialistes de ce domaine technique. On rappelle simplement que, lorsque deux modes optiques contrarotatifs circulent dans un laser en anneau animé d'un mouvement de rotation, leurs fréquences optiques subissent un décalage représentatif de la vitesse de rotation.

Actuellement, les gyrolasers commercialisés utilisent comme milieu amplificateur un mélange gazeux d'hélium et de néon. Cette technologie, délicate à mettre en oeuvre, présente un certain nombre d'inconvénients. Aussi, il est actuellement envisagé de substituer au milieu amplificateur à gaz un milieu amplificateur à état solide, comme, par exemple, un cristal de néodyme-yttrium-aluminium-grenat (Nd-YAG) pompé par diodes laser. La faisabilité de tels gyrolasers a été démontrée avec succès. On se reportera, sur ce sujet, aux publications de S. Schwartz, G. Feugnet, P. Bouyer, E. Lariontsev, A Aspect and J.P. Pocholle dans Physics Review Letters 97, 093902 (2006) et de S. Schwartz, G. Feugnet, E. Lariontsev and J.P. Pocholle dans Physics Review A 76, 023807 (2007). Les performances inertielles d'un tel dispositif sont d'autant meilleures que sa réponse en fréquence est linéaire, c'est-à-dire que l'on obtient sur une plage de fonctionnement la plus importante possible un signal de battement entre les deux modes contrarotatifs dont la fréquence est proportionnelle à la vitesse de rotation de l'ensemble.

Une première source de non-linéarité de la réponse en fréquence dans les lasers à état solide est liée à l'existence d'un réseau d'inversion de population dans le milieu à gain, induit par émission stimulée. Il est établi, dans les références précédentes, que l'écart $\Delta f$ à la réponse en fréquence idéale par ce réseau de gain est donné par les relations (A) suivantes :

$$\Delta f = \frac{\gamma \eta}{4\pi \Gamma_1 \Omega} \ \text{avec} \ \frac{\Omega}{2\pi} = \frac{4A}{\lambda L}.\dot{\theta}$$

Où $\gamma$ représente le taux de perte en intensité par unité de temps ;
$\eta$ est l'excès relatif de pompe au-dessus du seuil de pompage ;
$T_1$ est le temps de réponse de l'inversion de population ;
$A$ est l'aire inscrite dans la cavité laser ;
$\lambda$ est la longueur d'onde moyenne d'émission laser;
$L$ est la longueur de la cavité ;
$\theta$ est vitesse de rotation du gyrolaser.

La mise en vibration longitudinale du milieu amplifcateur permet de s'affranchir considérablement des effets du réseau d'inversion de population décrits ci-dessus. On se reportera pour des informations complémentaires sur cette technique à la demande de brevet EP 1 890 107. Il n'en demeure pas moins que la stabilité du taux de pompage $\eta$ demeure un critère important pour les performances des gyrolasers à état solide.

Un autre phénomène susceptible de dégrader les performances inertielles est dû aux résonances paramétriques pouvant survenir dans le gyrolaser, liées aux effets combinés de l'inertie du milieu à gain et de l'excitation du laser à la fréquence de battement lorsque celui-ci est en rotation. Il est en effet bien connu et décrit, par exemple, dans le livre de A. Siegman intitulé Lasers, University Science Books, Mill Valley, CA (1986) que certains lasers, appelés lasers de classe B pour lesquels le temps de réponse de l'inversion de population est très élevé devant les autres temps caractéristiques qui sont la durée de vie des cohérences et le temps caractéristique d'amortissement de la cavité, présentent un phénomène de réponse résonante autour d'une certaine fréquence caractéristique appelée fréquence de relaxation et notée $\omega_r/2\pi$ dans la suite de la description. Lorsque la vitesse de rotation du gyrolaser à état solide est telle que la fréquence de battement est égale ou très proche de la fréquence de relaxation, les intensités des modes émis par le laser deviennent très fortement instables, ce qui empêche l'observation du battement et détériore donc fortement les performances inertielles globales. En particulier, le gyrolaser à état solide utilisant un milieu amplificateur de type Nd-YAG pompé par diode est un laser de classe B et est donc soumis à ce phénomène.

Le gyrolaser selon l'invention possède au moins une boucle de rétroaction qui limite ou élimine en grande partie ces problèmes.

Plus précisément, l'invention a pour objet un gyrolaser comportant au moins une cavité optique en anneau comprenant au moins trois miroirs, un milieu amplificateur à l'état solide pompé par une diode laser dont la puissance optique d'émission est déterminée par une source d'alimentation en courant, la cavité et le milieu amplificateur étant tels que deux modes optiques dits contrarotatifs se propagent en sens inverse l'un de l'autre à l'intérieur de ladite cavité optique, le gyrolaser étant de classe B, le gyrolaser comprenant également des moyens de mesure de la différence de fréquence optique existant entre les deux modes optiques, caractérisé en ce que le gyrolaser comporte des moyens de mesure de la puissance optique totale circulant dans la cavité optique et des premiers moyens d'asservissement du courant délivré par la source d'alimentation de façon à maintenir la puissance optique totale sensiblement constante.

Avantageusement, les premiers moyens d'asservissement sont optimisés pour fonctionner dans une première bande de fréquence sensiblement centrée sur la fréquence de relaxation du laser et de largeur $1/(4\pi T_1)$, $T_1$ étant le temps de réponse de l'inversion de population dans le milieu amplificateur.

Avantageusement, le gyrolaser comporte des seconds moyens d'asservissement du courant délivré par la source d'alimentation optimisés pour fonctionner dans une seconde bande de fréquence dont la limite inférieure correspond aux basses fréquences voisines du continu et la limite supérieure correspond à la fréquence de relaxation.

Avantageusement, les premiers moyens d'asservissement sont périodiquement coupés de façon à laisser la puissance optique osciller à la fréquence de relaxation du laser, le gyrolaser comportant des moyens de mesure de ladite fréquence, des moyens de calcul du taux de pompage effective à partir de la mesure de ladite fréquence et des moyens d'ajustement des paramètres des seconds moyens d'asservissement, fonctions dudit taux de pompage.

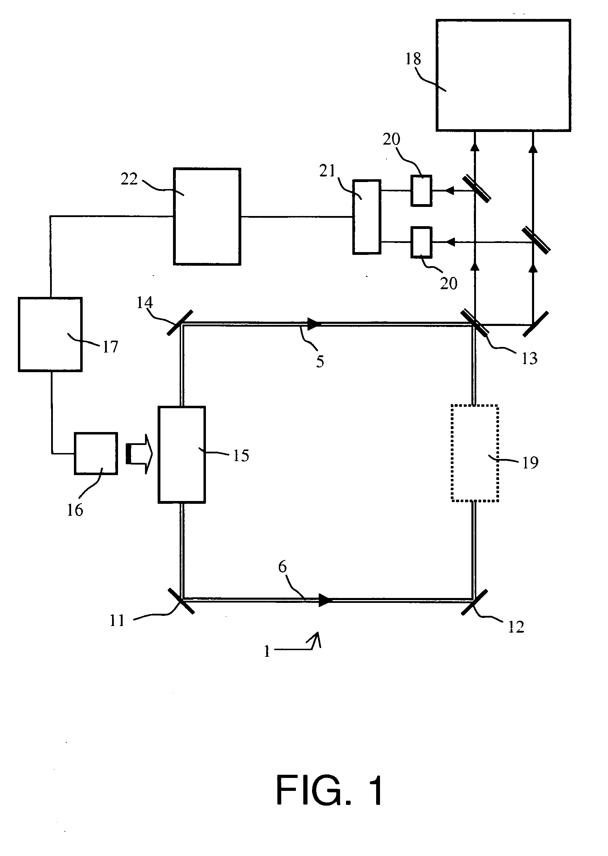

L'invention sera mieux comprise et d'autres avantages apparaîtront à la lecture de la description qui va suivre donnée à titre non limitatif et grâce à la figure 1 annexée représentant le synoptique d'un gyrolaser selon l'invention.

Il est intéressant, avant de présenter un mode de réalisation d'un gyrolaser, de rappeler le fonctionnement d'un laser de classe B. Dans le cadre d'un modèle simplifié, un laser de classe B peut être décrit par les deux paramètres réels $E$ et $N$ représentant respectivement le champ électrique à l'intérieur de la cavité et l'inversion de population ou gain du laser. Ces deux paramètres obéissent aux équations différentielles semi-classiques (B) suivantes :

$$\frac{dE}{dt} = -\frac{\gamma}{2}.E + \frac{\sigma l}{2T}.NE \text{ et } \frac{dN}{dt} = W - \frac{N}{T_1} - \frac{aE^2 N}{2T_1}$$

où

$\sigma$ représente la section efficace d'émission laser ;
$l$ est la longueur effective du milieu à gain ;
$T$ est le temps de parcours de la cavité par un photon ;
$W$ est le taux de pompage optique ;

Avec $\eta = \frac{W\sigma l T_1}{\gamma T} - 1$ et $a$ le paramètre de saturation.

Avec ces notations, et en introduisant de plus le temps de vie des cohérences $T_2$, les conditions (C) pour avoir un laser de classe B s'écrivent :

$$T_1 >> T_2 \text{ et } T_1 >> \gamma^{-1}$$

A titre d'exemple non limitatif, pour un laser en anneau à état solide dont la cavité a un périmètre de 30 centimètres et présente un taux de perte de 2% par tour, ce qui correspond à un $\gamma$ de $2.10^7.s^{-1}$ et dont le milieu amplificateur est un cristal de Nd-YAG vérifiant $T_1 = 230\mu s$ et $T_2 = 10^{-11} s$, les inégalités (C) sont bien vérifiées et ce laser est, par conséquent, de classe B.

Un couple de solutions stationnaires des équations (B) correspondant à l'émission laser au dessus du seuil est donné par les relations (D) :

$$N_{st} = \frac{\gamma T}{\sigma l} \text{ et } aE_{st}^2 = 2\eta$$

Si l'on applique une perturbation sinusoïdale à partir de cet état stationnaire, par exemple, à l'aide d'un terme source de type $\int \cos \omega t$ dans la première équation du système (B), en supposant que la perturbation est très petite par rapport aux autres termes de cette équation, on peut alors écrire la nouvelle solution des équations du laser comme la somme de la solution stationnaire (D) et d'un terme correctif très petit par rapport à la solution stationnaire et variant sinusoïdalement à la pulsation ω. On obtient le couple d'équations (E) :

$$N = N_{st} + n\cos(\omega t + \varphi) \quad \text{et} \quad E = E_{st} + e\cos(\omega t + \varphi')$$

Au voisinage de la résonance et dans la limite des faibles taux de pompage, on obtient la relation (F) qui lie la perturbation e induite sur le champ électrique du laser E et la force de l'excitation sinusoïdale $f$ :

$$e = \frac{f}{\sqrt{1/T_1^2 + 4(\omega - \omega_r)^2}} \quad \text{avec} \quad \omega_r = \sqrt{\frac{\eta}{T_1}}$$

L'équation (F) montre que le système laser répond de manière résonante à une excitation sinusoïdale, la sensibilité maximale étant obtenue au voisinage de la fréquence de relaxation $\omega_r/2\pi$. La largeur typique de cette résonance est de plus donnée par l'expression $1/2T_1$, où $T_1$ est l'inverse du temps de vie de l'inversion de population. Avec les grandeurs typiques données précédemment, et η=0.2, on a $\omega_r/2\pi \approx 21$kHz, pour une largeur de résonance de l'ordre de 350 Hz.

Le système répond donc préférentiellement aux perturbations situées dans une étroite bande de fréquences centrée sur la fréquence de relaxation du laser. Ce dernier est donc tout particulièrement sensible aux perturbations survenant dans cette bande de fréquences. Une telle perturbation peut par exemple provenir des vibrations mécaniques de l'extérieur du dispositif. Elle peut aussi, dans le cas du gyrolaser, provenir de l'intérieur du laser sous l'effet de la rotation. En effet, la différence de fréquence entre les deux modes contrarotatifs est donnée, en première approximation, par la formule (G) suivante :

$$\frac{\Omega}{2\pi} = \frac{4A}{\lambda L} . \dot{\theta}$$

Une résonance paramétrique, susceptible de déstabiliser le laser et donc de perturber la mesure de la rotation, survient lorsque $\Omega \approx \omega_r$, ce qui correspond à $\dot{\theta} \approx \dot{\theta}_{cr}$, la vitesse de rotation critique $\dot{\theta}_{cr}$ étant donnée par la formule (H)

suivante : $\dot{\theta}_{cr} = \frac{\lambda L.\omega_r}{8\pi A}$

Avec les paramètres donnés précédemment et en supposant un laser dont la cavité carrée a un périmètre de 30 centimètres et émettant à une longueur d'onde de 1.06 μm, on obtient l'ordre de grandeur suivant : $\dot{\theta}_{cr}$ = 17 deg/$s$.

De même, on déduit de la largeur du pic de résonance calculée plus haut $\Delta\dot{\theta}_{cr}$ =0.3deg/$s$. Une telle plage de disparition du battement correspond donc à une « zone aveugle » supplémentaire de plusieurs dixièmes de degré par seconde et située à l'intérieur de la zone d'utilisation du gyrolaser, ce qui induit nécessairement une forte dégradation des performances inertielles.

Pour corriger ce problème, le gyrolaser selon l'invention comporte au moins une première boucle de contre-réaction agissant sur le courant d'alimentation de la diode laser de pompage optique. Plus précisément, un laser à état solide selon l'invention tel que représenté en figure 1 comporte :

- une cavité optique 1 en anneau comprenant quatre miroirs 11, 12, 13 et 14. Bien entendu, la forme sensiblement carrée de la cavité optique représentée sur la figure 1 n'est donnée qu'à titre indicatif. La cavité pourrait également être de forme triangulaire ou rectangulaire, contenue ou non dans un plan ;
- un milieu amplificateur 15 à l'état solide pompé par une diode laser 16 dont la puissance optique d'émission est déterminée par une source d'alimentation en courant 17, ce milieu peut être, par exemple, un cristal de Nd-YAG. Bien entendu, la représentation de la diode sur la figure 1 est purement formelle. Le milieu amplificateur peut être pompé par plusieurs diodes agencées de façon à optimiser le rendement de conversion, l'homogénéité de l'amplification, les états de polarisation,.... ;

- la cavité 1 et le milieu amplificateur 15 étant tels que deux modes optiques 5 et 6 dits contrarotatifs se propagent en sens inverse l'un de l'autre à l'intérieur de ladite cavité optique, le gyrolaser étant de classe B, selon la définition donnée dans cette description ;

- des moyens de mesure 18 de la différence de fréquence optique existant entre les deux modes optiques. Ces moyens consistent le plus souvent d'une part en des dispositifs interférométriques permettant de faire interférer les deux modes contrarotatifs entre eux et d'autre part en des moyens optoélectroniques permettant d'analyser la fréquence du signal d'interférence. Ces moyens sont bien connus des spécialistes des gyrolasers et ne sont pas détaillés dans cette description ;
- différents moyens optiques 19 permettant de réduire ou d'éliminer le couplage optique entre les deux modes contrarotatifs, ces différents moyens sont généralement basés soit sur des effets optiques non réciproques comme l'effet Faraday soit sur la polarisation, les deux modes contrarotatifs ayant alors des polarisations différentes. Le dispositif selon l'invention est compatible de ces différents moyens ;
- des moyens de mesure 20 et 21 de la puissance optique totale circulant dans la cavité optique. Ces moyens peuvent être, par exemple, constitués de deux photo-détecteurs sur lesquels sont envoyés une faible fraction des modes contrarotatifs, les signaux électroniques issus de ces deux photodétecteurs étant ensuite sommés électroniquement ;
- des premiers moyens d'asservissement 22 du courant délivré par la source d'alimentation de façon à maintenir la puissance optique totale sensiblement constante.

Ces moyens d'asservissement fonctionnent préférentiellement sur une plage de fréquence centrée sur la fréquence de relaxation et dont la largeur minimale est donnée par $1/4\pi T_1$, la valeur de la fréquence de relaxation augmentant avec le taux de pompage. Le signal d'erreur représentant l'intensité totale du laser est constitué de la somme incohérente des intensités des deux faisceaux contrarotatifs émis par le laser. On agit alors sur le courant de pompe de la diode afin de s'opposer aux variations de puissance totale autour de la fréquence $\omega_r$. Un tel dispositif permet d'éviter un emballement du laser menant rapidement à sa déstabilisation et maintient au contraire les deux intensités dans un mode de fonctionnement stable.

Il est à noter qu'il existe une méthode permettant de supprimer les oscillations de relaxation du spectre des lasers solides. On trouvera de plus amples informations sur cette méthode dans les publications de T.Kane parue dans IEEE Photonics Technology letters 2, 244 (1990) et de C. Harb, M. Gray, H.-A. Bachor, R. Schilling, P. Rottengatter, I. Freitag and H. Welling, IEEE journal of Quantum Electronics 30 (12), 2907 (1994). Cependant, il existe entre le dispositif selon l'invention et cet art antérieur plusieurs différences fondamentales exposées ci-dessous :

Les ordres de grandeur ne sont pas les mêmes. Dans le dispositif selon l'invention, il s'agit d'empêcher un emballement du laser pouvant conduire à une modulation des intensités allant jusqu'à 100% et de maintenir le laser dans un état d'équilibre suffisant pour que l'on puisse faire une mesure. Alors que les dispositifs décrits dans les publications précédentes permettent de supprimer de petites variations, typiquement de moins de 1% de l'intensité afin de les faire disparaître du spectre de bruit d'un laser qui est par ailleurs naturellement en permanence à l'équilibre ;

Le domaine technique est différent. Les lasers des publications de Kane et de Harb ne sont pas des gyrolasers mais des lasers en anneau à modes contrarotatifs ;

Enfin, le domaine d'utilisation n'est pas le même. Il s'agit dans le cadre de cette invention de capteurs inertiels, alors que les publications de Kane et de Harb traitent de lasers maîtres à grande pureté spectrale et à faible bruit.

Le bon fonctionnement du dispositif est garanti par le fait que le laser présente un maximum de sensibilité et donc la boucle de contre réaction présente un maximum d'efficacité autour de la fréquence de relaxation qui est justement la fréquence à laquelle le gyrolaser doit être corrigé. Naturellement, les moyens d'asservissement tiennent compte de la réponse en amplitude et en phase du gyrolaser à une modulation sinusoïdale du taux de pompe, les ordres de grandeur des paramètres d'asservissement pouvant être déterminés expérimentalement ab initio.

Un deuxième phénomène nécessitant un contrôle actif de la puissance délivrée par la diode de pompage optique dans un gyrolaser à état solide concerne l'effet des variations spatiales du gain sur la réponse en fréquence, de telles variations étant susceptibles d'introduire un couplage entre les modes contrarotatifs de la cavité laser par « effet réseau ». Cette non linéarité de la réponse en fréquence induite par le gain dont la valeur est donnée par la relation (A) est en particulier proportionnelle au taux de pompage $\eta$. Comme il a été dit, des dispositifs particuliers peuvent être mis en oeuvre pour réduire cette valeur, par exemple, la mise en vibration longitudinale du milieu à gain. On peut montrer que sous certaines conditions portant notamment sur la fréquence de vibration du milieu à gain, cette non-linéarité se réécrit $\Delta f = \eta J_0(kx_m)/(4\pi T_1\Omega)$ où $k = 2\pi/\lambda$ et où $x_m$ est l'amplitude crête à crête du mouvement. Si le respect de la condition $J_0(kx_m) \ll 1$ permet de réduire grandement l'effet de cette non-linéarité, le biais résiduel n'en demeure pas moins proportionnel lui aussi au taux de pompage et nécessite également un contrôle de la valeur moyenne du taux de pompage.

Le gyrolaser selon l'invention peut donc comporter une seconde boucle de contre-réaction ayant pour but de maintenir constante la valeur moyenne du taux de pompage optique dans le gyrolaser à état solide, afin de limiter la dégradation des performances induites par le caractère non-uniforme du gain ; le domaine d'action de cette boucle concerne plutôt les basses fréquences et en tout état de cause les fréquences inférieures à $\omega_r$.

Il est alors avantageux de tirer parti de l'information donnée par la mesure de la fréquence de relaxation afin d'évaluer précisément le taux de pompage effectif du laser pour le signal d'erreur de la seconde boucle de contre-réaction. Une telle mesure pouvant être rendue plus difficile par la mise en place de la première boucle de contre-réaction, cette dernière peut être interrompue périodiquement selon, par exemple, un échantillonnage basse fréquence afin de permettre cette mesure.

**Revendications**

1. Gyrolaser comportant au moins une cavité optique (1) en anneau comprenant au moins trois miroirs (11, 12, 13, 14), un milieu amplificateur (15) à l'état solide pompé par une diode laser (16) dont la puissance optique d'émission est déterminée par une source d'alimentation en courant (17), la cavité (1) et le milieu amplificateur (15) étant tels que deux modes optiques (5, 6) dits contrarotatifs se propagent en sens inverse l'un de l'autre à l'intérieur de ladite cavité optique, le gyrolaser étant de classe B, le gyrolaser comprenant également des moyens de mesure (18) de la différence de fréquence optique existant entre les deux modes optiques, **caractérisé en ce que** le gyrolaser comporte des moyens de mesure (20, 21) de la puissance optique totale circulant dans la cavité optique et des premiers moyens d'asservissement (22) du courant délivré par la source d'alimentation de façon à maintenir la puissance optique totale sensiblement constante.

2. Gyrolaser selon la revendication 1, **caractérisé en ce que** les premiers moyens d'asservissement sont optimisés pour fonctionner dans une première bande de fréquence sensiblement centrée sur la fréquence de relaxation du laser et de largeur $1/4\pi T_1$, $T_1$ étant le temps de réponse de l'inversion de population dans le milieu amplificateur.

3. Gyrolaser selon la revendication 2, **caractérisé en ce que** le gyrolaser comporte des seconds moyens d'asservissement du courant délivré par la source d'alimentation optimisés pour fonctionner dans une seconde bande de fréquence dont la limite inférieure correspond aux basses fréquences voisines du continu et la limite supérieure correspond à la fréquence de relaxation.

4. Gyrolaser selon la revendication 3, **caractérisé en ce que** les premiers moyens d'asservissement sont périodiquement coupés de façon à laisser la puissance optique osciller à la fréquence de relaxation du laser, le gyrolaser comportant des moyens de mesure de ladite fréquence, des moyens de calcul du taux de pompage effective à partir de la mesure de ladite fréquence et des moyens d'ajustement des paramètres des seconds moyens d'asservissement, fonctions dudit taux de pompage.

**Claims**

1. A laser gyroscope comprising at least one optical ring cavity (1) comprising at least three mirrors (11, 12, 13, 14), a solid state amplifying medium (15) pumped by a laser diode (16), the optical emitting power of which is determined by a current supply source (17), the cavity (1) and the amplifying medium (15) being such that two optical modes (5, 6), referred to as counter-rotating modes, propagate in opposite directions to each other inside said optical cavity, the laser gyroscope being a class B laser gyroscope, the laser gyroscope further comprising means for measuring (18) the difference in optical frequency that exists between the two optical modes, **characterised in that** the laser gyroscope comprises means for measuring (20, 21) the total optical power circulating in the optical cavity and first means for controlling (22) the current delivered by the power supply source so as to maintain the total optical power in a substantially constant manner.

2. The laser gyroscope according to claim 1, **characterised in that** the first control means are optimised to operate in a first frequency band that is substantially centred on the relaxation frequency of the laser and is of width $1/4\pi T_1$, $T_1$ being the response time of the population inversion in the amplifying medium.

3. The laser gyroscope according to claim 2, **characterised in that** the laser gyroscope comprises second means for controlling the current delivered by the power supply source optimised to operate in a second frequency band, the lower limit of which corresponds to the low frequencies close to the direct voltage and the upper limit corresponds to the relaxation frequency.

4. The laser gyroscope according to claim 3, **characterised in that** the first control means are periodically cut off so as to allow the optical power to oscillate at the relaxation frequency of the laser, the laser gyroscope comprising means for measuring said frequency, means for calculating the effective pumping rate on the basis of the measurement of said frequency and means for adjusting the parameters of the second control means, as functions of said pumping rate.

**Patentansprüche**

1. Laserkreisel, der wenigstens einen ringförmigen optischen Hohlraum (1) umfasst, der wenigstens drei Spiegel (11, 12, 13, 14) umfasst, wobei ein Festkörper-Verstärkungsmedium (15) von einer Laserdiode (16) gepumpt wird, deren optische Emissionsleistung von einer Stromversorgungsquelle (17) bestimmt wird, wobei der Hohlraum (1) und das Verstärkungsmedium (15) derart sind, dass sich zwei optische Moden (5, 6), gegenrotierende Moden genannt, in entgegengesetzten Richtungen zueinander innerhalb des optischen Hohlraums ausbreiten, wobei der Laserkreisel ein Laserkreisel der Klasse B ist, wobei der Laserkreisel auch Mittel zum Messen (18) der Differenz der optischen Frequenz umfasst, die zwischen den beiden optischen Moden existiert, **dadurch gekennzeichnet, dass** der Laserkreisel Mittel zum Messen (20, 21) der in dem optischen Hohlraum umlaufenden optischen Gesamtleistung sowie erste Mittel zum Regeln (22) des von der Versorgungsquelle zugeführten Stroms umfasst, um die optische Gesamtleistung im Wesentlichen konstant zu halten.

2. Laserkreisel nach Anspruch 1, **dadurch gekennzeichnet, dass** die ersten Regelmittel für einen Betrieb in einem ersten Frequenzband optimiert sind, das im Wesentlichen auf der Entspannungsfrequenz des Lasers zentriert ist und eine Breite $1/4\pi T_1$, hat, wobei $T_1$ die Ansprechzeit der Populationsumkehr in dem Verstärkungsmedium ist.

3. Laserkreisel nach Anspruch 2, **dadurch gekennzeichnet, dass** der Laserkreisel zweite Mittel zum Regeln des von der Versorgungsquelle zugeführten Stroms ist, die für einen Betrieb in einem zweiten Frequenzband optimiert sind, deren Untergrenze den tiefen Frequenzen in der Nähe der Gleichspannung entspricht und deren Obergrenze der Entspannungsfrequenz entspricht.

4. Laserkreisel nach Anspruch 3, **dadurch gekennzeichnet, dass** die ersten Regelmittel periodisch abgeschaltet werden, damit die optische Leistung mit der Entspannungsfrequenz des Lasers oszillieren kann, wobei der Laserkreisel Mittel zum Messen der Frequenz, Mittel zum Berechnen der effektiven Pumprate auf der Basis der Messung der Frequenz und Mittel zum Justieren der Parameter der zweiten Regelmittel in Abhängigkeit von der Pumprate umfasst.

FIG. 1

8

EP 2 187 169 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1890107 A

**Littérature non-brevet citée dans la description**

- **S. Schwartz ; G. Feugnet ; P. Bouyer ; E. Lariontsev ; A Aspect ; J.P. Pocholle.** *Physics Review Letters,* 2006, vol. 97, 093902
- **S. Schwartz ; G. Feugnet ; E. Lariontsev ; J.P. Pocholle.** *Physics Review,* 2007, vol. A 76, 023807
- **A. Siegman.** Lasers. University Science Books, 1986
- **T.Kane.** *IEEE Photonics Technology letters,* 1990, vol. 2, 244
- **C. Harb ; M. Gray ; H.-A. Bachor ; R. Schilling ; P. Rottengatter ; I. Freitag ; H. Welling.** *IEEE journal of Quantum Electronics,* 1994, vol. 30 (12), 2907